(19)

Europäisches
Patentamt
European
Patent Office
Office européen
des brevets

(11) **EP 3 552 493 B1**

(12) **EUROPEAN PATENT SPECIFICATION**

(45) Date of publication and mention
of the grant of the patent:
**09.07.2025 Bulletin 2025/28**

(21) Application number: **17877465.9**

(22) Date of filing: **04.12.2017**

(51) International Patent Classification (IPC):
**A23C 9/13** (2006.01)   **A23C 9/123** (2006.01)

(52) Cooperative Patent Classification (CPC):
**A23C 9/1307**

(86) International application number:
**PCT/KR2017/014061**

(87) International publication number:
**WO 2018/105967 (14.06.2018 Gazette 2018/24)**

(54) **FERMENTED MILK COMPRISING SACCHARIDES CONTAINING HIGH CONTENT OF ALLULOSE**

FERMENTIERTE MILCH MIT SACCHARIDEN MIT HOHEM ALLULOSEGEHALT

LAIT FERMENTÉ COMPRENANT DES SACCHARIDES CONTENANT UN TAUX ÉLEVÉ D'ALLULOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2016 KR 20160167707**

(43) Date of publication of application:
**16.10.2019 Bulletin 2019/42**

(73) Proprietor: **CJ Cheiljedang Corporation**
**Seoul 04560 (KR)**

(72) Inventors:
• **KOH, Ji Hoon**
**Seoul 04111 (KR)**
• **PARK, Seung Won**
**Yongin-si**
**Gyeonggi-do 16894 (KR)**

• **JUNG, Dong Chul**
**Seoul 06779 (KR)**

(74) Representative: **Reddie & Grose LLP**
**The White Chapel Building**
**10 Whitechapel High Street**
**London E1 8QS (GB)**

(56) References cited:
EP-A2- 3 524 665     WO-A1-2016/135458
JP-A- 2014 014 276     KR-A- 20160 051 084
KR-A- 20160 081 049     KR-A- 20160 089 551
KR-A- 20160 143 444     US-A1- 2012 070 534

• KIMOTO-NIRA H ET AL: "Effects of rare sugarD-allulose on acid production and probiotic activities of dairy lactic acid bacteria", JOURNAL OF DAIRY SCIENCE, vol. 100, no. 7, July 2017 (2017-07-01), pages 5936 - 5944, XP085072470, ISSN: 0022-0302, DOI: 10.3168/JDS.2016-12214

## Description

### Field of the Invention

The present invention relates to fermented milk comprising saccharides comprising high content of allulose, and a method of improving storability of fermented milk using the saccharides.

### Description of the Related Art

Fermented milk, which is obtained by fermenting raw milk or processed daily food as a main ingredient using microorganisms (for example, lactic acid bacteria, yeasts, and the like), has been known to have various health functional effects such as an immune regulation effect, an anti-cancer effect, a cholesterol lowering effect as well as an intestinal regulation. Therefore, the fermented milk has been recognized as representative functional food, and has excellent sensory quality due to a unique flavor, such that the fermented milk has also been spotlighted as favorite food.

Since the fermented milk should contains viable lactic acid bacteria, normal temperature distribution of the fermented milk through sterilization is impossible, such that cold-storage distribution is required, and there are many limitations in securing an expiration date. The criteria for determining the expiration date of the fermented milk include that the fermented milk should not be spoiled within an expiration date, the number of viable lactic acid bacteria contained in the fermented milk should be equal to or greater than that satisfying a legal standard (in Korea, 'Processing Standards and Ingredient Specifications for Livestock Products'), and sensory quality should be maintained up to the expiration date, etc.

In Korea, a general expiration date of the existing fermented milk is about 10 to 14 days and does not exceed 2 weeks, and the expiration date may be considered to depend on deterioration of sensory quality rather than a risk of spoilage or maintenance of the number of lactic acid bacteria. Sensory quality of the fermented milk includes appearance (a color, syneresis, and the like), taste (a flavor, a sweet taste, a sour taste, and the like), physical properties (texture, viscosity, and the like), etc., and among them, the factor playing the most important role in determining the expiration date may be unique taste of the fermented milk, implemented by combination of sweet and sour tastes. Among the sweet and sour tastes determining the flavor of the fermented milk, the sweet taste is maintained to be almost constant during distribution, but in the case of the sour taste, lactic acid is generated due to post-fermentation by lactic acid bacteria existing in the fermented milk, such that, acidity and sour taste may be increased even during cold-storage distribution.

Allulose, which is a C-3 epimer of D-fructose, is a natural monosaccharide existing only in a trace amount in dry raisin, fig, wheat, and the like. A degree of sweetness of allulose is 70% of a degree of sweetness of sugar, but allulose has a caloric content of 0.2 kcal/g, which is 5% of a caloric content of sugar (4 kcal/g), such that allulose has been spotlighted as a raw material of a sweetener capable of replacing sugar, and has been applied to lactic acid bacteria-fermented products including milk. A method of maintaining acidity and pH in suitable ranges during a storage period has been reported (Korean Patent Registration No. 10-1648170), but there was a limitation in that the shelf life does not exceed a general expiration date of fermented milk.

WO2016135458 relates to allulose syrups.

KR20160051084 relates to a composition for increasing the storage stability of a lactic acid bacterium cultured product.

JP2014014276 relates to fermented milk and methods for making fermented milk having a reduced milky and fermented odor. Under the above-mentioned background, the present inventors have been studied in order to extend an expiration date of fermented milk. As a result, the present inventors found that in the case in which a content of allulose contained in saccharides added to the fermented milk is equal to or more than a predetermined content, microorganisms of the genus lactobacillus, microorganisms of the genus bifidobacterium, and microorganisms of the genus streptococcus are not able to grow, and an expiration date may be extended by suppressing post-fermentation to suppress a decrease in pH, and an increase in acidity and an increase in sourness of the fermented milk, and then the present invention was completed.

EP3524665 relates to a microorganism growth inhibitor including allulose-containing saccharides and a fermented alcoholic beverage.

KR 20160081049 relates to freeze-dried molded food using lactobacillus-fermented milk.

KR 20160089551 relates food or beverages comprising allulose.

### Disclosure

### Technical Problem

It is one object of the present invention to provide fermented milk comprising saccharides comprising high content of allulose.

It is another object of the present invention to provide a method of improving storability of fermented milk including: adding saccharides comprising high content of allulose in a lactic acid bacteria-culture product.

It is another object of the present invention to provide a growth inhibitor for microorganisms comprising saccharides comprising high content of allulose.

**Technical Solution**

In accordance with one aspect of the present invention, fermented milk contains saccharides comprising saccharides comprising allulose, wherein the allulose is contained in an amount of 70 to 98 parts by weight, relative to 100 parts by weight of the saccharides in terms of dried solid content; wherein the saccharides include fructose in an amount of 1 to 20 parts by weight, relative to 100 parts by weight of the saccharides in terms of dried solid content, wherein the allulose is contained in an amount of 5 to 15 parts by weight in terms of dried solid content, relative to 100 parts by weight of the fermented milk, wherein the saccharides include glucose in an amount of 15 parts by weight or less, relative to 100 parts by weight of the saccharides in terms of dried solid content, and wherein the saccharides does not contain sucrose.

The allulose in the present invention may be extracted directly from natural products, or may be chemically synthesized or biologically prepared, but is not limited thereto. In addition, the allulose may be provided in a crystal form or liquid form (that is, a syrup form). Liquid allulose may contain allulose in an amount of 70 to 99 wt% in terms of dried solid content (ds or DS). Further, crystal allulose may contain allulose in an amount of 90 to 100 wt% in terms of dried solid content.

As used herein, the term "fermented milk" refers to a product obtained by fermenting raw milk with microorganisms and includes fermented milk, thickened fermented milk, cream fermented milk, thickened cream fermented milk, fermented butter milk, and fermented milk powder according to Processing Standards and Ingredient Specifications for Livestock Products (Korea), but is not limited thereto. As used herein, the term "raw milk" may be one or more selected from the group consisting of raw milk, low-fat milk, fat-free milk, reconstituted milk, reconstituted low-fat milk, milk powder, and skim milk powder, but is not limited thereto.

A difference in pH of the fermented milk according to the present invention at 7°C after a date selected in 21 to 31 days from a manufacturing date, may be 0.30 or less. In detail, a difference in pH of the fermented milk according to the present invention at 7°C after a date selected in 21 to 28 days from the manufacturing date, may be 0.28 or less, or after a date selected in 21 to 24 days from manufacturing date, may be 0.27 or less.

Further, a pH of the fermented milk according to the present invention at 7°C after a date selected in 14 to 35 days from the manufacturing date, may be in a range of 4.25 to 4.5.

A difference in titratable acidity of the fermented milk according to the present invention may be 0.20% or less, at 7°C after a date selected in 17 to 28 days from the manufacturing date, as calculated according to the following Equation 1:

<Equation 1>

$$\text{Titratable acidity (\%)} = \frac{\text{0.1N NaOH titration amount(ml)} \times 0.009^* \times F^{**}}{\text{Sample weight (g)}} \times 100$$

\* 1ml of 0.1N NaOH corresponds to 0.009g of lactic acid.
\*\* Factor of 0.1N NaOH

Further, titratable acidity of the fermented milk according to the present invention may be less than 1.0%, at 7°C after a date selected in 14 to 35 days from the manufacturing date, as calculated according to the above Equation 1.

The fermented milk according to the present invention may contain at least one kind of microorganisms selected from the group consisting of microorganisms of the genus lactobacillus, microorganisms of the genus bifidobacterium, and microorganisms of the genus streptococcus. In detail, the fermented milk according to the present invention may contain at least one kind of microorganisms selected from the group consisting of *Lactobacillus acidophilus, Lactobacillus mesenteroides, Lactobacillus gasseri, Lactobacillus delbrueckii, Lactobacillus rhamnosus, Lactobacillus casei, Lactobacillus brevis, Lactobacillus salivarius, Lactobacillus plantarum, Bifidobacterium lactis,* and *Streptococcus thermophilus.*

In addition, according to the present invention, allulose may be contained in an amount of 5 to 10 parts by weight, or 5 to 8 parts by weight in terms of dried solid content, relative to 100 parts by weight of the fermented milk.

The saccharides may additionally include glucose. In detail, the combination of glucose and fructose according to the present invention may be included in an amount of 35 parts by weight or less, 30 parts by weight or less, 25 parts by weight or less, 20 parts by weight or less, 15 parts by weight or less, 10 parts by weight or less, 5 parts by weight or less, 1 to 35 parts by weight, 1 to 30 parts by weight, 1 to 25 parts by weight, 1 to 20 parts by weight, 1 to 15 parts by weight, 1 to 10 parts by weight, 1 to 5 parts by weight, 5 to 35 parts by weight, 5 to 30 parts by weight, 5 to 25 parts by weight, 5 to 20 parts by weight, 5 to 15 parts by weight, 5 to 10 parts by weight, 10 to 35 parts by weight, 10 to 30 parts by weight, 10 to 25 parts by weight, 10 to 20 parts by weight, 10 to 15 parts by weight, 15 to 35 parts by weight, 15 to 30 parts by weight, 15 to 25 parts by weight, 15 to 20 parts by weight, 20 to 35 parts by weight, 20 to 30 parts by weight, 20 to 25 parts by weight, 25 to 35 parts by weight, 25 to 30 parts by weight, or 30 to 35 parts by weight, relative to 100 parts by weight of the saccharides in terms of dried solid content. The fructose may be included in an amount of 15 parts by weight or less, 10 parts by weight or less, 5 parts by weight or less, 1 to 20 parts by weight, 1 to 15 parts by weight, 1 to 10 parts by weight, 1 to 5 parts by weight, 5 to 20 parts by weight, 5 to 15 parts by weight, 5 to 10 parts by weight, 10 to 20 parts by weight, 10 to 15 parts by weight, 15 to 20 parts by weight, relative to 100 parts by weight of the saccharides in terms of dried solid content. The glucose may be included in an amount of 10 parts by weight or less, 5 parts by weight or less, 1 to 15 parts by weight, 1 to 10 parts by weight, 1 to 5 parts by weight, 5 to 15 parts by weight, 5 to 10 parts by weight, 10 to 15 parts by weight, relative to 100 parts by weight of the saccharides in terms of dried solid content.

The fermented milk according to the present invention may additionally contain one or more saccharides (for example, monosaccharides, disaccharides, oligosaccharides, sugar alcohols, high-strength sweetener, and liquid sugar) in addition to allulose, glucose, and fructose.

More specifically, examples of the monosaccharides may include arabinose, xylose, tagatose, allose, galactose, and the like. The disaccharides refer to two monosaccharide units linked together, and examples thereof may include lactose, maltose, trehalose, turanose, cellobiose, and the like. The oligosaccharides refer to 3 or more monosaccharide units linked together, and examples thereof may include fructooligosaccharide, isomaltooligosaccharide, xylooligosaccharide, gentiooligosaccharide, malto-oligosaccharide, and galactooligosaccharide. Further, the sugar alcohols refer to compounds obtained by reducing a carbonyl group in saccharides, and examples thereof may include erythritol, xylitol, arabitol, mannitol, sorbitol, maltitol, and lactitol. The high-intensity sweeteners refer to sweeteners having a sweetness ten times or greater that of sucrose, and examples thereof may include aspartame, acesulfame K, rebaudioside A, and sucralose. The liquid sugar refers to sugar containing a sweetener in a liquid form, and examples thereof may include starch syrup, honey, maple syrup, and agave syrup, but are not limited thereto.

In another embodiment, the saccharides according to the present invention may not contain glucose.

The fermented milk according to the present invention may additionally contain 80 to 95 parts by weight of milk, relative to 100 parts by weight of the fermented milk. The milk may be raw milk, milk powder, whole milk powder, skim milk powder, or a combination thereof.

Further, the number of lactic acid bacteria in the fermented milk according to the present invention may be $10^8$ cfu/ml or more, at 7°C after a date selected in 14 to 35 days from the manufacturing date.

In accordance with another aspect of the present invention, there is provided a method of improving storability of fermented milk includes: adding saccharides comprising allulose to a lactic acid bacteria-culture product, wherein the allulose is contained in an amount of 70 to 98 parts by weight, relative to 100 parts by weight of the saccharides in terms of dried solid content; wherein the saccharides include fructose in an amount of 1 to 20 parts by weight, relative to 100 parts by weight of the saccharides in terms of dried solid content,

    wherein the allulose is contained in an amount of 5 to 15 parts by weight in terms of dried solid content, relative to 100 parts by weight of the fermented milk,
    wherein the saccharides include glucose in an amount of 15 parts by weight or less, relative to 100 parts by weight of the saccharides in terms of dried solid content, and
    wherein the saccharides does not contain sucrose.

The lactic acid bacteria used in the method of improving storability of fermented milk may be microorganisms contained in the above-mentioned fermented milk.

In detail, improvement of storability may be caused by suppression of a decrease in pH, suppression of an increase in acidity, suppression of an increase in sourness, suppression of post-fermentation, or suppression of growth of microorganism.

In the method of improving storability of fermented milk, the adding of the saccharides comprising allulose may be adding the saccharides and milk to the lactic acid bacteria-culture product.

A description of contents of the method of improving storability of fermented milk and the growth inhibitor for microorganisms comprising saccharides comprising allulose will be omitted in order to avoid excessive complexity of the present specification, since their contents are overlapped with contents of the fermented milk comprising saccharides comprising allulose described above (that is, fermented milk, saccharides, allulose, microorganisms contained in the fermented milk, pH, titratable acidity, and the like).

**Effect of the Invention**

The fermented milk using allulose according to the present invention may suppress a decrease in pH and increases in acidity and sourness during cold-storage distribution after manufacturing the product, and suppress post-fermentation and growth of microorganism. Therefore, the fermented milk according to the present invention may significantly extend the expiration date of the fermented milk by increasing a sensory quality maintenance period and maintaining the number of lactic acid bacteria. Further, the fermented milk may decrease calorie of the product, such that the fermented milk is beneficial to improving health.

**Brief Description of Drawings**

FIG. 1 is a graph illustrating a change in pH during cold-storage of fermented milk according to an exemplary embodiment of the present invention.
FIG. 2 is a graph illustrating a change in acidity during cold-storage of fermented milk according to an exemplary embodiment of the present invention.
FIG. 3 is a graph illustrating a change in sourness during cold-storage of fermented milk according to an exemplary embodiment of the present invention.
FIG. 4 is a graph illustrating a change in the number of lactic acid bacteria during cold-storage of fermented milk according to an exemplary embodiment of the present invention.

**Detailed Description of the Invention**

The present invention will be described in detail with reference to the following Examples, but the following Examples are provided for illustration only, and the present invention is not limited thereto.

**1. Experimental Example 1: Manufacturing of fermented milk**

Raw milk (97% (w/w)) and skim milk powder (3% (w/w)), which were raw materials, were mixed with each other at the above-mentioned mixing ratio at room temperature, stirred for 30 minutes, and sterilized at 90°C for 10 minutes, and then cooled to 40°C. ABT-5 (Chr. Hansen, Denmark, hereinafter, referred to as 'lactic acid bacteria'), which is a starter in which *Lactobacillus acidophilus, Bifidobacterium lactis,* and *Streptococcus thermophilus* are mixed with each other, was aseptically inoculated into the mixture, thereby preparing a lactic acid bacteria inoculum.
After the lactic acid bacteria inoculum was cultured in a 40 °C incubator (Jeio Tech IL-11 incubator, Korea) for 4 to 5 hours until pH thereof reached 4.6 and titratable acidity thereof reached in the vicinity of 0.9%, the curd was crushed and rapidly cooled to 20 °C or less, followed by homogenization (NiroSoavi NS2006H homogenizer, Italy) at a pressure of 150 bar, thereby preparing a lactic acid bacteria culture solution.
Separately from the lactic acid bacteria culture solution, a high fructose corn syrup (75 Brix; a mixture of fructose (55 wt%), glucose (41 wt%), and maltose (4 wt%); 'High fructose corn syrup' manufactured by Cheiljedang), 50% allulose-mixed sugar syrup [prepared by mixing allulose (72 Brix, allulose content: 98 wt% or more, 'liquid allulose' manufactured by Cheiljedang) and the 'high fructose corn syrup' with each other so that a dried solid content of allulose was 50 wt%], 60% allulose-mixed sugar syrup [prepared by mixing the 'allulose' and the 'high fructose corn syrup' with each other so that a dried solid content of allulose was 60 wt%], 70% allulose-mixed sugar syrup [prepared by mixing the 'liquid allulose' and the 'high fructose corn syrup' with each other so that a dried solid content of allulose was 70 wt%], 80% allulose-mixed sugar syrup [prepared by mixing the 'allulose' and the 'high fructose corn syrup' with each other so that a dried solid content of allulose was 80 wt%], and allulose syrup (the 'liquid allulose') were prepared, respectively (Table 1). Since allulose and the allulose-mixed sugar have sweetness lower than that of the high fructose corn syrup, sweetness was compensated for using rebaudioside A (RA) (RA content: 90 wt%, MacroCare Tech., Ltd.) as a natural high-intensity sweetener.
After each of the syrups was stirred at room temperature for 30 minutes, sterilized at 90 °C for 10 minutes, and cooled to 10 °C or less, respectively, the lactic acid bacteria culture solution and each of the syrups were mixed with each other at a weight ratio of 85:15, thereby completing the manufacturing of fermented milk.

Table 1. Mixing ratio of fermented milk

| Raw materials of fermented milk | | Mixing ratio (wt%) | | | | | |
|---|---|---|---|---|---|---|---|
| | | Comparative Example | *Example 1 | *Example 2 | Example 3 | Example 4 | Example 5 |
| Lactic acid bacteria culture solution(85) | Raw milk 97 wt%, Skim milk powder 3 wt%, ABT-5 | 85 | 85 | 85 | 85 | 85 | 85 |
| Syrup(15) | High fructose com syrup (75Btrix, fructose 55 wt%, glucose 41 wt%, maltose, etc. 4 wt% | 10 | 4.9 | 3.88 | 2.86 | 1.84 | 0 |
| | Allulose (72Brix, allulose 98 wt%, fructose 2 wt%) | 0 | 5.1 | 6.12 | 7.14 | 8.16 | 10 |
| | Rebaudiosid e A (RA 90 wt%) | 0 | 0.01 | 0.012 | 0.014 | 0.016 | 0.02 |
| | Purified water | 5 | 4.99 | 4.988 | 4.986 | 4.984 | 4.98 |
| Sum | | 100 | 100 | 100 | 100 | 100 | 100 |
| Content in Syrup (dried solid content) | Allulose | 0 | 49.98 | 59.98 | 69.97 | 79.36 | 98.00 |
| | Glucose | 41 | 20.51 | 16.31 | 12.07 | 7.80 | 0.00 |
| | Fructose | 55 | 27.51 | 22.88 | 17.40 | 11.88 | 1.63 |
| *Comparative example | | | | | | | |

## 2. Experimental Example 2: Storage test of fermented milk

Six kinds of fermented milk in Comparative Example and Comparative Examples 1 and 2 and Examples 4 and 5 were filled in a plurality of sterilized vessels (200mL/vessel) and cold-stored (Jeio Tech IL-11 incubator, Korea) at 7°C, thereby performing a storage test. Samples were extracted on day 0, 1, 3, 5, 7, 10, 14, 17, 21, 24, 28, 31, and 35 during a storage period, and measurement of pH, titratable acidity, and sourness through a sensory test for the samples was conducted. Further, the number of lactic acid bacteria was additionally measured on day 0, 3, 7, 10, 14, 17, 21, 24, 28, 31, and 35 during the storage period.

In the case in which the titratable acidity was 1.00% or more or a sourness score is 7 points or more based on a 9-point scale, sensory quality was deteriorated, and in the case in which the number of lactic acid bacteria is $10^8$ cfu/ml or less, the samples did not satisfy legal standards for thickened fermented milk according to 'Processing Standards and Ingredient Specifications for Livestock Products (Korea)', such that the date on which the samples were extracted, was determined to be unsuitable for securing a normal expiration date.

2-1. Measurement of pH depending on storage period

A temperature of each of the extracted samples was adjusted to 20 °C, and pH thereof was measured using a pH meter (Mettler-ToledoSevenCompact pH/Ion S220, U.S.).

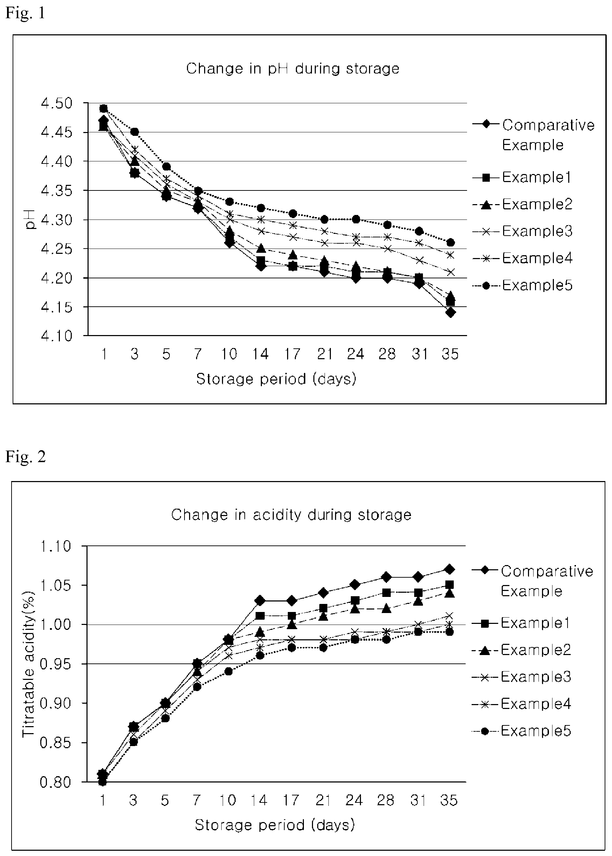

As a result, immediately after manufacturing the fermented milk, the pH of each of the samples was 4.5 to 4.6, but during cold-storage, the pH was gradually decreased. Therefore, it may be confirmed that in Comparative Example and Comparative Examples 1 and 2, pH was decreased to be less than 4.25 between day 10 to 14, corresponding to an expiration date of the existing fermented milk. But, in Example 3, the pH of 4.25 or more was maintained up to day 28 of cold-storage, in Example 4, and the pH of 4.25 or more was maintained up to day 31 of cold-storage, and in Example 5, the pH of 4.25 or more was maintained even up to day 35 of cold-storage (Table 3 and FIG. 1).

Therefore, it may be confirmed that the allulose had an effect of suppressing a decrease in pH during the cold-storage of the fermented milk, but in the cases of using the allulose-mixed sugar syrup in which the content of allulose was 60% or less (Comparative Examples 1 and 2) in the fermented milk, the effect was not large, but in the cases of using allulose-mixed sugar syrups in which the content of allulose was 70% or more in the fermented milk (Examples 3 to 5), the effect was significant.

2-2. Measurement of titratable acidity depending on storage period

Titratable acidity was measured by extracting 9g of a sample, mixing the sample with the same amount of carbon dioxide-free distilled water, stirring the mixture, and then titrating the mixture with 0.1N NaOH up to pH 8.3. Thus, a titration amount of NaOH was converted into acidity of lactic acid according to the following Equation.

<Equation 1>

$$\text{Titratable acidity (\%)} = \frac{0.1N \text{ NaOH titration amount(ml)} \times 0.009^* \times F^{**}}{\text{Sample weight (g)}} \times 100$$

\* 1ml of 0.1N NaOH corresponds to 0.009g of lactic acid.
\*\* Factor of 0.1N NaOH

As a result, acidity that was about 0.8 immediately after manufacturing the fermented milk was gradually increased during cold-storage, such that in Comparative Example and Comparative Example 1, acidity arrived up to 1.00% on day 14 of cold-storage. Therefore, it was impossible to overcome a limitation of the existing fermented milk that an expiration date does not exceed 14 days, and acidity tended to be continuously increased depending on the storage period. In Comparative Example 2, acidity reached 1.00% on day 17 of cold-storage, such that an effect of extending the expiration date was not large. However, in Example 3, acidity did not reach 1.00% up to day 28 of cold-storage, and in Example 4, acidity did not reach 1.00% up to day 31 of cold-storage, and in Example 5, acidity did not reach 1.00% up to day 35 of cold-storage, and a change in acidity after 14 days tended to be significant small, which shows a possibility that the expiration date may be significantly increased (Table 3 and FIG. 2).

Therefore, it may be appreciated that allulose had an effect of suppressing an increase in acidity during the cold-storage of the fermented milk, but in the cases of using the allulose-mixed sugar syrup in which the content of allulose was 60% or less in the fermented milk (Comparative Examples 1 and 2), the effect was not large, but in the cases of using the allulose-mixed sugar syrups in which the content of allulose was 70% or more in the fermented milk (Examples 3 to 5), the effect was increased in proportion to the content of allulose.

2-3. Measurement of sourness depending on storage period

Sourness was measured through the sensory evaluation, and the sensory test was performed by a total of 10 trained panelists for the sensory test. The sensory test was performed by setting the following standard using a 9-point scale as illustrated in Table 2.

Table 2

| No sour taste | | | Weakly sour taste | | | Moderately sour taste | | | Sour taste | | | Very sour taste |
|---|---|---|---|---|---|---|---|---|---|---|---|---|
| 1 point | 2 point | 3 point | 4 point | 5 point | 6 point | 7 point | 8 point | 9 point | | | | |

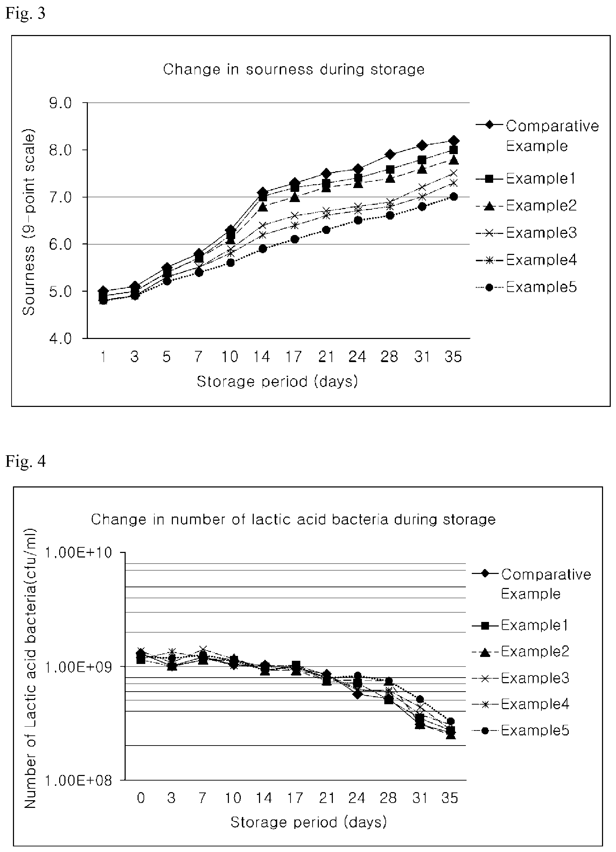

As a result, a sourness score that was the level of 5 points (moderately sour taste) immediately after manufacturing the fermented milk was gradually increased during cold-storage, such that in Comparative Example and Comparative Example 1, the sourness score reached up to 7 points (sour taste) on day 14 of cold-storage. Therefore, it was impossible to overcome a limitation of the existing fermented milk that an expiration date does not exceed 14 days, and sourness tended to be continuously increased even after 14 days. In Comparative Example 2, the sourness score reached 7 points on day 17 of cold-storage, such that an effect of extending the expiration date was not large. However, in Examples 3 and 4, the sourness score reached 7 points on day 31 of cold-storage, and in Example 5, the sourness score reached 7 points on day 35 of cold-storage, which shows a possibility that the expiration date may be significantly increased (Table 3 and FIG. 3).

Therefore, it may be appreciated that allulose had an effect of suppressing an increase in sourness during the cold-storage of the fermented milk, but in the cases of using the allulose-mixed sugar syrup in which the content of allulose was 60% or less in the fermented milk (Comparative Examples 1 and 2), the effect was not large, but in the cases of using allulose-mixed sugar syrups in which the content of allulose was 70% or more in the fermented milk (Examples 3 to 5), the effect was increased in proportion to the content of allulose.

2-4. Measurement of the number of lactic acid bacteria Depending on Storage Period

In order to measure the number of lactic acid bacteria, each of the samples was aseptically diluted with sterilized normal saline, and a BCP Plate count agar (Eiken Chemical, Japan) and a standard plate count method were used. The number of viable lactic acid bacteria was calculated by counting only yellow colonies after culturing the diluted samples at 37°C for 72 hours (Jeio Tech IL-11 incubator, Korea) and multiplying a dilution factor and the counted number of yellow colonies.

As a result, it was confirmed that in all Comparative Example and Examples, the number of lactic acid bacteria that was about $10^9$ cfu/ml immediately after manufacturing the fermented milk tended to be constantly maintained during cold-storage but be deceased after 17 days. However, the number of lactic acid bacteria was maintained to be $10^8$ cfu/ml or more up to day 35 of cold-storage. Therefore, it was confirmed that even though the allulose was added to the fermented milk, the expiration date was not decreased due to a decrease in the number of lactic acid bacteria (Table 3 and FIG. 4).

Table 3. Results of storage test of fermented milk

| Storage period (7°C) | Sample | pH | Titratable acidity (%) | Sourness (9-point scale) | Number of lactic acid bacteria (cfu/ml) | Reference |
|---|---|---|---|---|---|---|
| Day 0 | Comparative Example | 4.60 | 0.79 | 4.9 | 1.31E+09 | |
| | Example 1 | 4.55 | 0.79 | 4.8 | 1.15E+09 | |
| | Example 2 | 4.54 | 0.79 | 4.8 | 1.31E+09 | |
| | Example 3 | 4.53 | 0.78 | 4.8 | 1.38E+09 | |
| | Example 4 | 4.54 | 0.78 | 4.7 | 1.15E+09 | |
| | Example 5 | 4.54 | 0.78 | 4.7 | 1.23E+09 | |
| Day 1 | Comparative Example | 4.47 | 0.81 | 5.0 | | |
| | Example 1 | 4.46 | 0.81 | 4.9 | | |
| | Example 2 | 4.46 | 0.81 | 4.9 | | |
| | Example 3 | 4.46 | 0.81 | 4.8 | | |
| | Example 4 | 4.49 | 0.80 | 4.8 | | |
| | Example 5 | 4.49 | 0.80 | 4.8 | | |
| Day 3 | Comparative Example | 4.38 | 0.87 | 5.1 | 1.02E+09 | |
| | Example 1 | 4.38 | 0.87 | 5.0 | 1.00E+09 | |
| | Example 2 | 4.40 | 0.87 | 5.0 | 1.01E+09 | |
| | Example 3 | 4.41 | 0.86 | 4.9 | 1.09E+09 | |
| | Example 4 | 4.42 | 0.85 | 4.9 | 1.34E+09 | |
| | Example 5 | 4.45 | 0.85 | 4.9 | 1.19E+09 | |

(continued)

| Storage period (7°C) | Sample | pH | Titratable acidity (%) | Sourness (9-point scale) | Number of lactic acid bacteria (cfu/ml) | Reference |
|---|---|---|---|---|---|---|
| Day 5 | Comparative Example | 4.34 | 0.90 | 5.5 | | |
| | Example 1 | 4.34 | 0.90 | 5.4 | | |
| | Example 2 | 4.35 | 0.90 | 5.4 | | |
| | Example 3 | 4.36 | 0.90 | 5.3 | | |
| | Example 4 | 4.37 | 0.89 | 5.3 | | |
| | Example 5 | 4.39 | 0.88 | 5.2 | | |
| Day 7 | Comparative Example | 4.32 | 0.95 | 5.8 | 1.20E + 09 | |
| | Example 1 | 4.32 | 0.95 | 5.7 | 1.14E + 09 | |
| | Example 2 | 4.33 | 0.94 | 5.7 | 1.14E + 09 | |
| | Example 3 | 4.33 | 0.94 | 5.5 | 1.41E + 09 | |
| | Example 4 | 4.34 | 0.93 | 5.5 | 1.20E + 09 | |
| | Example 5 | 4.35 | 0.92 | 5.4 | 1.26E + 09 | |
| Day 10 | Comparative Example | 4.26 | 0.98 | 6.3 | 1.03E + 09 | |
| | Example 1 | 4.27 | 0.98 | 6.2 | 1.14E + 09 | |
| | Example 2 | 4.28 | 0.98 | 6.1 | 1.19E + 09 | |
| | Example 3 | 4.30 | 0.97 | 5.9 | 1.17E + 09 | |
| | Example 4 | 4.31 | 0.96 | 5.8 | 1.02E + 09 | |
| | Example 5 | 4.33 | 0.94 | 5.6 | 1.13E + 09 | |
| Day 14 | Comparative Example | 4.22 | **1.03** | **7.1** | 1.02E + 09 | Unsuitable |
| | Example 1 | 4.23 | **1.01** | **7.0** | 1.00E + 09 | Unsuitable |
| | Example 2 | 4.25 | 0.99 | 6.8 | 9.2E + 08 | |
| | Example 3 | 4.28 | 0.98 | 6.4 | 9.3E + 08 | |
| | Example 4 | 4.30 | 0.97 | 6.2 | 1.00E + 09 | |
| | Example 5 | 4.32 | 0.96 | 5.9 | 9.2E + 08 | |
| Day 17 | Comparative Example | 4.22 | **1.03** | **7.3** | 9.4E+08 | Unsuitable |
| | Example 1 | 4.22 | **1.01** | **7.2** | 1.02E+09 | Unsuitable |
| | Example 2 | 4.24 | **1.00** | **7.0** | 9.3E+08 | Unsuitable |
| | Example 3 | 4.27 | 0.98 | 6.6 | 1.03E + 09 | |
| | Example 4 | 4.29 | 0.98 | 6.4 | 9.4E + 08 | |
| | Example 5 | 4.31 | 0.97 | 6.1 | 9.9E+08 | |
| Day 21 | Comparative Example | 4.21 | **1.04** | **7.5** | 8.6E + 08 | Unsuitable |
| | Example 1 | 4.22 | **1.02** | **7.3** | 7.4E + 08 | Unsuitable |
| | Example 2 | 4.23 | **1.01** | **7.2** | 7.5E + 08 | Unsuitable |
| | Example 3 | 4.26 | 0.98 | 6.7 | 8.5E + 08 | |
| | Example 4 | 4.28 | 0.98 | 6.6 | 8.1E+08 | |
| | Example 5 | 4.30 | 0.97 | 6.3 | 8.0E+08 | |

(continued)

| Storage period (7°C) | Sample | pH | Titratable acidity (%) | Sourness (9-point scale) | Number of lactic acid bacteria (cfu/ml) | Reference |
|---|---|---|---|---|---|---|
| Day 24 | Comparative Example | 4.20 | **1.05** | **7.6** | 5.7E + 08 | Unsuitable |
| | Example 1 | 4.21 | **1.03** | **7.4** | 7.1E + 08 | Unsuitable |
| | Example 2 | 4.22 | **1.02** | **7.3** | 7.6E + 08 | Unsuitable |
| | Example 3 | 4.26 | 0.99 | 6.8 | 6.2E + 08 | |
| | Example 4 | 4.27 | 0.98 | 6.7 | 6.1E + 08 | |
| | Example 5 | 4.30 | 0.98 | 6.5 | 8.3E + 08 | |
| Day 28 | Comparative Example | 4.20 | **1.06** | **7.9** | 5.2E + 08 | Unsuitable |
| | Example 1 | 4.21 | **1.04** | **7.6** | 5.1E+08 | Unsuitable |
| | Example 2 | 4.21 | **1.02** | **7.4** | 7.5E + 08 | Unsuitable |
| | Example 3 | 4.25 | 0.99 | 6.9 | 6.0E + 08 | |
| | Example4 | 4.27 | 0.99 | 6.8 | 6.1E + 08 | |
| | Example 5 | 4.29 | 0.98 | 6.6 | 7.5E+08 | |
| Day 31 | Comparative Example | 4.19 | **1.06** | **8.1** | 3.1E+08 | Unsuitable |
| | Example 1 | 4.20 | **1.04** | **7.8** | 3.5E + 08 | Unsuitable |
| | Example 2 | 4.20 | **1.03** | **7.6** | 3.1E + 08 | Unsuitable |
| | Example 3 | 4.23 | **1.00** | **7.2** | 3.8E + 08 | Unsuitable |
| | Example 4 | 4.26 | 0.99 | **7.0** | 4.4E + 08 | Unsuitable |
| | Example 5 | 4.28 | 0.99 | 6.8 | 5.1E + 08 | |
| Day 35 | Comparative Example | 4.14 | **1.07** | **8.2** | 2.60E + 08 | Unsuitable |
| | Example 1 | 4.16 | **1.05** | **8.0** | 2.75 E + 08 | Unsuitable |
| | Example 2 | 4.17 | **1.04** | **7.8** | 2.51E + 08 | Unsuitable |
| | Example 3 | 4.21 | **1.01** | **7.5** | 3.10E + 08 | Unsuitable |
| | Example 4 | 4.24 | **1.00** | **7.3** | 2.78E + 08 | Unsuitable |
| | Example 5 | 4.26 | 0.99 | **7.0** | 3.29E + 08 | Unsuitable |

Taking the results of the storage test together, in Comparative Example in which the high-fructose corn syrup generally used in the existing art was used as saccharides added to the fermented milk and in Comparative Example 1 in which the 50% allulose-mixed sugar syrup was used as saccharides added to the fermented milk, the acidity reached 1.00% and the sourness score reached 7 points on day 14 of cold-storage. Therefore, it was impossible to overcome a limitation of the existing fermented milk that an expiration date does not exceed 14 days. Further, in Comparative Example 2 in which the 60% allulose-mixed sugar syrup was used, the acidity reached 1.00% and the sourness score reached 7 points on day 17 of cold-storage, such that an effect of extending an expiration date of the fermented milk was insufficient. On the contrary, in Example 3 in which the 70% allulose-mixed sugar syrup was used as the saccharides of the fermented milk and in Example 4 in which the 80% allulose-mixed sugar syrup was used as the saccharides of the fermented milk, the acidity did not reach 1.00% and the sourness score did not reach 7 points, up to day 28 of cold-storage. Also, in Example 5 in which only liquid allulose was used as saccharides of the fermented milk, the acidity did not reach 1.00% and the sourness score did not reach 7 points, up to day 31 of cold-storage. Therefore, it may be appreciated that in the case of using saccharides in which a dried solid content of allulose is 70 wt% or more in fermented milk, the expiration date may be extended two times or more than 14 days in the existing art.

**3. Experimental Example 3: Evaluation of growth inhibition activity of allulose against lactic acid bacteria**

In order to confirm whether or not allulose may inhibit growth of other lactic acid bacteria except for lactic acid bacteria contained in the ABT-5, and then suppress lactic acid fermentation, a culture experiment was conducted on 18 kinds of representative lactic acid bacteria.

A minimal medium was prepared to have a composition illustrated in the following Table 4 and sterilized at 121 °C for 15 minutes (Jeio Tech AC-13 autoclave, Korea). Separately, glucose and allulose were dissolved in distilled water, respectively, to prepare a 50% (w/v) glucose solution and a 50% (w/v) allulose solution, respectively, and then filtered using a 0.45μm micro-filter (Pall Life Sciences Acrodisc syringe filter, U.S.A.). Then, each of the 50% (w/v) glucose solution and the 50% (w/v) allulose solution was mixed with the sterilized minimal medium at a ratio of 4:96, thereby preparing a glucose medium and an allulose medium.

Table 4. Composition of minimal medium

| Composition of medium | Addition amount (/L) |
| --- | --- |
| Peptone | 10g |
| Sodium Acetate 3$H_2$O | 5g |
| Diammonium Citrate | 2g |
| Dipotassium Phosphate | 2g |
| Tween 80 | 10mL |
| Magnesium Sulfate 7$H_2$O | 1mL |
| Manganese Sulfate 4$H_2$O | 1mL |

18 kinds of representative lactic acid bacteria (Table 5) were selected, inoculated into the glucose medium and the allulose medium, respectively, and cultured in a 37°C incubator (Jeio Tech IL-11 incubator, Korea). Then, samples were extracted at predetermined times (0, 3, 6, 9, 12, 24, and 48 hours), and an absorbance thereof was measured at 600 nm (Hitachi U-2900 spectrophotometer, Japan).

As a result, in the glucose medium, all the 18 kinds of lactic acid bacteria normally grew, but in the allulose medium, all the 18 kinds of lactic acid bacteria did not normally grow, such that the absorbance was not increased (Table 5). Therefore, it may be appreciated that the allulose may suppress growth of the 18 kinds of lactic acid bacteria, and have an effect of extending an expiration date by suppressing lactic acid post-fermentation due to suppressing the growth, in fermented milk manufactured using the culture solutions obtained by culturing the 18 kinds of lactic acid bacteria.

Table 5. Evaluation result of allulose utilization ability of lactic acid bacteria

| *Lactobacillus acidophilus A* | | | *Leuconostoc mesenteroides* | | | *Lactobacillus gasseri* | | |
| --- | --- | --- | --- | --- | --- | --- | --- | --- |
| 37°C | Glucose | Allulose | 37°C | Glucose | Allulose | 37°C | Glucose | Allulose |
| 0h | 0.106 | 0.073 | 0h | 0.104 | 0.081 | 0h | 0.086 | 0.076 |
| 3h | 0.153 | 0.086 | 3h | 0.321 | 0.084 | 3h | 0.152 | 0.083 |
| 6h | 0.184 | 0.078 | 6h | 0.988 | 0.084 | 6h | 0.249 | 0.085 |
| 9h | 0.210 | 0.068 | 9h | 1.191 | 0.084 | 9h | 0.332 | 0.105 |
| 12h | 0.274 | 0.086 | 12h | 1.445 | 0.095 | 12h | 0.467 | 0.090 |
| 24h | 0.322 | 0.067 | 24h | 1.532 | 0.062 | 24h | 0.724 | 0.071 |
| 48h | 0.327 | 0.070 | 48h | 1.469 | 0.078 | 48h | 0.772 | 0.050 |
| *Lactobacillus delbrueckii* | | | *Lactobacillus acidophilus B* | | | *Lactobacillus rhamnosus* GG | | |
| 37°C | Glucose | Allulose | 37°C | Glucose | Allulose | 37°C | Glucose | Allulose |
| 0h | 0.082 | 0.075 | 0h | 0.085 | 0.070 | 0h | 0.085 | 0.080 |
| 3h | 0.116 | 0.089 | 3h | 0.114 | 0.088 | 3h | 0.139 | 0.089 |
| 6h | 0.168 | 0.089 | 6h | 0.160 | 0.070 | 6h | 0.348 | 0.091 |
| 9h | 0.220 | 0.086 | 9h | 0.194 | 0.078 | 9h | 0.502 | 0.091 |
| 12h | 0.279 | 0.098 | 12h | 0.265 | 0.094 | 12h | 0.678 | 0.099 |
| 24h | 0.290 | 0.080 | 24h | 0.276 | 0.072 | 24h | 0.764 | 0.087 |

(continued)

| *Lactobacillus delbrueckii* | | | *Lactobacillus acidophilus B* | | | *Lactobacillus rhamnosus* GG | | |
|---|---|---|---|---|---|---|---|---|
| 37°C | Glucose | Allulose | 37°C | Glucose | Allulose | 37°C | Glucose | Allulose |
| 48h | 0.231 | 0.082 | 48h | 0.221 | 0.076 | 48h | 0.744 | 0.088 |
| *Lactobacillus acidophilus C* | | | *Lactobacillus casei A* | | | *Lactobacillus brevis* | | |
| 37°C | Glucose | Allulose | 37°C | Glucose | Allulose | 37°C | Glucose | Allulose |
| 0h | 0.063 | 0.081 | 0h | 0.075 | 0.081 | 0h | 0.065 | 0.067 |
| 3h | 0.092 | 0.089 | 3h | 0.259 | 0.101 | 3h | 0.168 | 0.075 |
| 6h | 0.133 | 0.091 | 6h | 0.283 | 0.127 | 6h | 0.394 | 0.074 |
| 9h | 0.179 | 0.091 | 9h | 0.397 | 0.141 | 9h | 0.523 | 0.075 |
| 12h | 0.218 | 0.098 | 12h | 0.693 | 0.149 | 12h | 0.691 | 0.080 |
| 24h | 0.262 | 0.079 | 24h | 1.164 | 0.122 | 24h | 0.931 | 0.060 |
| 48h | 0.184 | 0.072 | 48h | 1.228 | 0.139 | 48h | 0.910 | 0.052 |
| *Lactobacillus acidophilus D* | | | *Lactobacillus acidophilus E* | | | *Lactobacillus acidophilus F* | | |
| 37°C | Glucose | Allulose | 37°C | Glucose | Allulose | 37°C | Glucose | Allulose |
| 0h | 0.083 | 0.091 | 0h | 0.085 | 0.102 | 0h | 0.080 | 0.086 |
| 3h | 0.227 | 0.109 | 3h | 0.254 | 0.119 | 3h | 0.186 | 0.103 |
| 6h | 0.996 | 0.120 | 6h | 0.433 | 0.116 | 6h | 0.268 | 0.118 |
| 9h | 1.213 | 0.119 | 9h | 0.501 | 0.138 | 9h | 0.332 | 0.132 |
| 12h | 1.428 | 0.154 | 12h | 0.610 | 0.174 | 12h | 0.477 | 0.143 |
| 24h | 1.554 | 0.121 | 24h | 0.521 | 0.134 | 24h | 0.626 | 0.108 |
| 48h | 1.493 | 0.109 | 48h | 0.626 | 0.115 | 48h | 0.922 | 0.088 |
| *Lactobacillus acidophilus G* | | | *Lactobacillus salivarius* | | | *Lactobacillus plantarum* | | |
| 37°C | Glucose | Allulose | 37°C | Glucose | Allulose | 37°C | Glucose | Allulose |
| 0h | 0.084 | 0.093 | 0h | 0.087 | 0.117 | 0h | 0.099 | 0.095 |
| 3h | 0.147 | 0.097 | 3h | 0.158 | 0.092 | 3h | 0.215 | 0.097 |
| 6h | 0.288 | 0.092 | 6h | 0.338 | 0.122 | 6h | 0.992 | 0.091 |
| 9h | 0.327 | 0.091 | 9h | 0.365 | 0.115 | 9h | 1.198 | 0.096 |
| 12h | 0.333 | 0.099 | 12h | 0.396 | 0.131 | 12h | 1.399 | 0.110 |
| 24h | 0.275 | 0.078 | 24h | 0.376 | 0.095 | 24h | 1.517 | 0.093 |
| 48h | 0.234 | 0.077 | 48h | 0.314 | 0.096 | 48h | 1.460 | 0.095 |
| *Lactobacillus casei* B | | | *Lactobacillus acidophilus* H | | | *Lactobacillus acidophilus* I | | |
| 37°C | Glucose | Allulose | 37°C | Glucose | Allulose | 37°C | Glucose | Allulose |
| 0h | 0.083 | 0.098 | 0h | 0.088 | 0.096 | 0h | 0.070 | 0.074 |
| 3h | 0.138 | 0.099 | 3h | 0.145 | 0.097 | 3h | 0.179 | 0.092 |
| 6h | 0.362 | 0.099 | 6h | 0.306 | 0.094 | 6h | 0.136 | 0.089 |
| 9h | 0.405 | 0.095 | 9h | 0.375 | 0.092 | 9h | 0.176 | 0.088 |
| 12h | 0.407 | 0.101 | 12h | 0.412 | 0.097 | 12h | 0.226 | 0.097 |
| 24h | 0.378 | 0.086 | 24h | 0.437 | 0.080 | 24h | 0.265 | 0.073 |
| 48h | 0.269 | 0.074 | 48h | 0.396 | 0.090 | 48h | 0.173 | 0.070 |

**Claims**

1. A fermented milk comprising saccharides comprising allulose, wherein the allulose is contained in an amount of 70 to 98 parts by weight, relative to 100 parts by weight of the saccharides in terms of dried solid content,

   wherein the saccharides include fructose in an amount of 1 to 20 parts by weight, relative to 100 parts by weight of the saccharides in terms of dried solid content,
   wherein the allulose is contained in an amount of 5 to 15 parts by weight in terms of dried solid content, relative to 100 parts by weight of the fermented milk,
   wherein the saccharides include glucose in an amount of 15 parts by weight or less, relative to 100 parts by weight of the saccharides in terms of dried solid content, and
   wherein the saccharides does not contain sucrose.

2. The fermented milk according to claim 1, further comprising at least one kind of microorganisms selected from the group consisting of microorganisms of the genus lactobacillus, microorganisms of the genus bifidobacterium, and microorganisms of the genus streptococcus.

3. The fermented milk according to claim 1, further comprising at least one kind of microorganisms selected from the group consisting of Lactobacillus acidophilus, Lactobacillus mesenteroides, Lactobacillus gasseri, Lactobacillus delbrueckii, Lactobacillus rhamnosus, Lactobacillus casei, Lactobacillus brevis, Lactobacillus salivarius, Lactobacillus plantarum, Bifidobacterium lactis, and Streptococcus thermophilus.

4. A method of improving storability of fermented milk, the method comprising:

   adding saccharides comprising allulose to a lactic acid bacteria-culture product,
   wherein the allulose is contained in an amount of 70 to 98 parts by weight, relative to 100 parts by weight of the saccharides in terms of dried solid content,
   wherein the saccharides include fructose in an amount of 1 to 20 parts by weight, relative to 100 parts by weight of the saccharides in terms of dried solid content,
   wherein the allulose is contained in an amount of 5 to 15 parts by weight in terms of dried solid content, relative to 100 parts by weight of the fermented milk,
   wherein the saccharides include glucose in an amount of 15 parts by weight or less, relative to 100 parts by weight of the saccharides in terms of dried solid content, and
   wherein the saccharides does not contain sucrose.

5. The method according to claim 4, wherein the improvement of storability is caused by suppression of a decrease in pH, suppression of an increase in acidity, suppression of an increase in sourness, suppression of post-fermentation, or suppression of growth of microorganism.

6. The method according to claim 4, wherein the lactic acid bacteria are at least one kind of microorganisms selected from the group consisting of microorganisms of the genus lactobacillus, microorganisms of the genus bifidobacterium, and microorganisms of the genus streptococcus.

**Patentansprüche**

1. Vergorene Milch, die Saccharide aufweist, die Allulose aufweisen, wobei die Allulose in einer Menge von 70 bis 98 Gewichtsanteilen relativ zu 100 Gewichtsanteilen der Saccharide in Bezug auf den Trockenfeststoffgehalt enthalten ist,

   wobei die Saccharide Fructose in einer Menge von 1 bis 20 Gewichtsanteilen relativ zu 100 Gewichtsanteilen der Saccharide in Bezug auf den Trockenfeststoffgehalt beinhalten,
   wobei die Allulose in einer Menge von 5 bis 15 Gewichtsanteilen in Bezug auf den Trockenfeststoffgehalt relativ zu 100 Gewichtsanteilen der vergorenen Milch enthalten ist,
   wobei die Saccharide Glucose in einer Menge von 15 Gewichtsanteilen oder weniger relativ zu 100 Gewichtsanteilen der Saccharide in Bezug auf den Trockenfeststoffgehalt beinhalten und
   wobei die Saccharide keine Saccharose enthalten.

**2.** Vergorene Milch nach Anspruch 1, die ferner mindestens eine Art von Mikroorganismen aufweist, die aus der Gruppe bestehend aus Mikroorganismen der Gattung Lactobacillus, Mikroorganismen der Gattung Bifidobacterium und Mikroorganismen der Gattung Streptococcus ausgewählt ist.

**3.** Vergorene Milch nach Anspruch 1, die ferner mindestens eine Art von Microorganismen umfasst, die aus der Gruppe bestehend aus Lactobacillus acidophilus, Lactobacillus mesenteroides, Lactobacillus gasseri, Lactobacillus delbrueckii, Lactobacillus rhamnosus, Lactobacillus casei, Lactobacillus brevis, Lactobacillus salivarius, Lactobacillus plantarum, Bifidobacterium lactis und Streptococcus thermophilus ausgewählt ist.

**4.** Verfahren zur Verbesserung der Lagerfähigkeit von vergorener Milch, wobei das Verfahren Folgendes umfasst:

Zugeben von Sacchariden, die Allulose aufweisen, zu einem mit Milchsäurebakterienkultur erhaltenen Produkt, wobei die Allulose in einer Menge von 70 bis 98 Gewichtsanteilen relativ zu 100 Gewichtsanteilen der Saccharide in Bezug auf den Trockenfeststoffgehalt enthalten ist,
wobei die Saccharide Fructose in einer Menge von 1 bis 20 Gewichtsanteilen relativ zu 100 Gewichtsanteilen der Saccharide in Bezug auf den Trockenfeststoffgehalt beinhalten,
wobei die Allulose in einer Menge von 5 bis 15 Gewichtsanteilen in Bezug auf den Trockenfeststoffgehalt relativ zu 100 Gewichtsanteilen der vergorenen Milch enthalten ist,
wobei die Saccharide Glucose in einer Menge von 15 Gewichtsanteilen oder weniger relativ zu 100 Gewichtsanteilen der Saccharide in Bezug auf den Trockenfeststoffgehalt beinhalten und
wobei die Saccharide keine Saccharose enthalten.

**5.** Verfahren nach Anspruch 4, wobei die Verbesserung der Lagerfähigkeit durch Unterdrückung einer Erhöhung des pH-Werts, Unterdrückung einer Erhöhung des Säuregrads, Unterdrückung einer Erhöhung der Säuerlichkeit, Unterdrückung von Nachgärung oder Unterdrückung des Wachstums von Mikroorganismen verursacht wird.

**6.** Verfahren nach Anspruch 4, wobei die Milchsäurebakterien zumindest eine Art von Mikroorganismen sind, die aus der Gruppe bestehend aus Mikroorganismen der Gattung Lactobacillus, Mikroorganismen der Gattung Bifidobacterium und Mikroorganismen der Gattung Streptococcus ausgewählt ist.

## Revendications

**1.** Lait fermenté comprenant des saccharides comprenant de l'allulose,

dans lequel l'allulose est contenu en une quantité de 70 à 98 parties en poids, par rapport à 100 parties en poids des saccharides de contenu solide sec,
dans lequel les saccharides comprennent du fructose en une quantité de 1 à 20 parties en poids, par rapport à 100 parties en poids des saccharides de contenu solide sec,
dans lequel l'allulose est contenu en une quantité de 5 à 15 parties en poids de contenu solide sec, par rapport à 100 parties en poids du lait fermenté,
dans lequel les saccharides comprennent du glucose en une quantité de 15 parties en poids ou moins, par rapport à 100 parties en poids des saccharides de contenu solide sec, et
dans lequel les saccharides ne comprennent pas de saccharose.

**2.** Lait fermenté selon la revendication 1, comprenant en outre au moins une sorte des micro-organismes sélectionnés parmi le groupe de micro-organismes du genre Lactobacillus, de micro-organismes du genre Bifidobacterium et de micro-organismes du genre Streptococcus.

**3.** Lait fermenté selon la revendication 1, comprenant en outre au moins une sorte des micro-organismes sélectionnés parmi le groupe composé de Lactobacillus acidophilus, Lactobacillus mesenteroides, Lactobacillus gasseri, Lactobacillus delbrueckii, Lactobacillus rhamnosus, Lactobacillus casei, Lactobacillus brevis, Lactobacillus salivarius, Lactobacillus plantarum, Bifidobacterium lactis et Streptococcus thermophilus.

**4.** Procédé d'amélioration de la capacité de stockage de lait fermenté, le procédé comprenant :

ajouter des saccharides comprenant de l'allulose à un produit de culture de bactéries d'acide lactique,
dans lequel l'allulose est contenu en une quantité de 70 à 98 parties en poids, par rapport à 100 parties en poids des saccharides de contenu solide sec,

dans lequel les saccharides comprennent du fructose en une quantité de 1 à 20 parties en poids, par rapport à 100 parties en poids des saccharides de contenu solide sec,

dans lequel l'allulose est contenu en une quantité de 5 à 15 parties en poids de contenu solide sec, par rapport à 100 parties en poids du lait fermenté,

dans lequel les saccharides comprennent du glucose en une quantité de 15 parties en poids ou moins, par rapport à 100 parties en poids des saccharides de contenu solide sec, et

dans lequel les saccharides ne comprennent pas de saccharose.

5. Procédé selon la revendication 4, dans lequel l'amélioration de la capacité de stockage est causée par la suppression d'une baisse de pH, la suppression d'une augmentation d'acidité, la suppression d'une augmentation d'aigreur, la suppression de post-fermentation ou la suppression de la croissance de micro-organisme.

6. Procédé selon la revendication 4, dans lequel les bactéries d'acide lactique sont au moins une sorte des micro-organismes sélectionnés parmi le groupe composé de micro-organismes du genre Lactobacillus, de micro-organismes du genre Bifidobacterium et de micro-organismes du genre Streptococcus.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101648170
- WO 2016135458 A
- KR 20160051084
- JP 2014014276 B
- EP 3524665 A
- KR 20160081049
- KR 20160089551